# EUROPEAN PATENT APPLICATION

(11) **EP 4 105 188 A1**
(43) Date of publication of application: **21.12.2022**
(21) Application number: 21179436.7
(22) Date of filing: 15.06.2021
(51) Int. Cl.: C03C 17/00, C03C 17/30, C08J 3/205, C08J 5/18, C08K 7/28, C08K 7/26, C09D 183/00

(54) **COMPOSITION FOR MANUFACTURING SHEET MOLDING COMPOUNDS**

(71) Applicant: Evonik Corporation, Parsippany NJ 07054 (US)
(72) Inventor: SHEVRIN, Jacob, Port Washington, NY 11050 (US); TREICH, Gregory, Sommerset, NJ 08873 (US)
(74) Representative: Evonik Patent Association

(57) **Abstract**

The present invention relates to a composition suitable for manufacturing of sheet molding compounds, a method for preparing said composition, a method for making an article using said composition, an article with said composition, a mobility device comprising at least one such article. It is further directed at the use of at least one silane, a hydrolysate, an oligomer or a polymer thereof, to control the viscosity of a liquid mixture comprising an unsaturated polyester and at least one hollow glass body.

## Description

The present invention relates to a composition suitable for manufacturing sheet molding compounds, a method for preparing said composition, a method for making an article using said composition, an article made from said composition, a mobility device comprising at least one such article. It is further directed at the use of at least one silane compound, an oligomer or a polymer thereof, to control the viscosity of a liquid mixture comprising an unsaturated polyester and at least one hollow glass body.

### BACKGROUND OF THE INVENTION

For years now, the automotive industry has been using methacryl-functional silane-treated hollow glass bodies such as glass microspheres (or glass bubbles) in sheet molding compounds for light weighting applications. One popular silane used for this application is the methacryloxypropyltrimethoxysilane (see e.g. US 2012/0373650 A1). Methacryl-functional silanes are commonly used for this application because the methacryl group on the surface of the hollow glass bodies can bond with (or couple to) components in the sheet molding compound system, leading to stronger, more durable mechanical properties of the final system. These sheet molding compounds (typically unsaturated polyester resin based) are much lighter than the metal parts of automobiles. The less metal on the car, the lighter the car is and the better the fuel efficiency (hence the light weighting trends of this industry moving forward). The hollow glass bodies in these sheet molding compounds have very low densities, and make up a significant amount of volume in the system without adding too much weight to the system.

Historically, 45 vol.-% hollow glass bodies are added into the unsaturated polyester resin systems, but recent trends are calling for higher loadings of hollow glass bodies for ultra-light weighting applications such as 55 vol.-%. This increase to 55 vol.-% hollow glass bodies loading creates an unworkable viscosity for the unsaturated polyester system, as all the hollow glass bodies in the system tend to aggregate and cause friction, making the system too viscous to work with.

Occasionally in the art, polyolefins are described having high loadings of glass microspheres incorporated therein. For example, EP 3 130 616 A1 discloses a polyolefin composition having up to 60 wt.-% of such glass bodies. However, polyolefins lack the mechanical properties required in the automotive industry. Polyolefins further require too high processing temperatures for being used in SMC processing and applications.

### OBJECTIVE OF THE INVENTION

It is therefore the objective of the present invention to overcome the shortcomings of the prior art. Thus, it is an objective of the present invention to provide a composition suitable for manufacturing of sheet molding compounds. Ideally, the sheet molding compounds are capable of comprising an increased amount of hollow glass bodies, decreasing the overall weight of the composition and the articles formed therewith.

### SUMMARY OF THE INVENTION

These objectives are solved by using the inventive composition suitable for manufacturing of sheet molding compounds comprising
a) at least one unsaturated polyester resin, and
b) at least one hollow glass body
wherein the at least one hollow glass body comprises at least one coating layer on (at least a part of) its surface obtained (or obtainable) by treating the at least one hollow glass body with a treatment composition comprising at least one silane compound according to formula (A)

R^{a1}-Si-(OR^{a2} )₃ (A)

wherein
R^{a1} is selected from the group consisting of alkyl group having at least 4 carbon atoms, oligo(oxyalkanediyl) group and poly(oxyalkanediyl) group,
each R^{a2} is independently selected from the group consisting of hydrogen, alkyl group and aryl group, an oligomer or a polymer formed therewith.

Advantageously, the composition according to the invention exhibits a lower viscosity compared to prior art solutions, especially during processing said composition.

It is a further advantage of the present invention that the composition according to the invention is suitable for ultra-lightweight applications and its usage in the automotive industry is therefore environmentally friendly. Articles formed with the composition of the present invention advantageously have sound mechanical properties. Such mechanical properties include *inter alia* tensile strength, impact resistance, fatigue resistance, flexural strength and tensile modulus.

Preferred embodiments solving above described objections particularly well are described in the appended description and in the dependent claims.

### DETAILED DESCRIPTION OF THE INVENTION

Percentages throughout this specification are weight-percentages (wt.-% or weight-%) unless stated otherwise. Concentrations given in this specification refer to the volume or mass of the entire solutions or dispersions unless stated otherwise. Embodiments and preferences described for one aspect of the present invention apply *mutatis mutandis* for all the other aspects thereof unless technically unfeasible or stated otherwise. The repetition is omitted to improve the conciseness of the specification. If more than one residue is to be selected from a given group, each of the residues is selected independently from each other unless stated otherwise hereinafter, meaning they can be selected to be the same members or different members of said group.

The term "alkyl" according to the present invention comprises branched or unbranched alkyl groups comprising cyclic and/or non-cyclic structural elements, wherein cyclic structural elements of the alkyl groups naturally require at least three carbon atoms. C1-CX-alkyl in this specification and in the claims refers to alkyl groups having 1 to X carbon atoms (X being an integer). C1-C8-alkyl for example includes, among others, methyl, ethyl, n-propyl, iso-propyl, n-butyl, isobutyl, sec-butyl, tert-butyl, n-pentyl, iso-pentyl, sec-pentyl, tert-pentyl, neo-pentyl, hexyl, heptyl and octyl. Substituted alkyl groups may theoretically be obtained by replacing at least one hydrogen by a functional group. Unless stated otherwise, alkyl groups are preferably unsubstituted.

The term "alkanediyl" is the corresponding group having two free valences (bonding sites). Sometimes, it is referred to as "alkylene" in the art. Said residues according to the present invention comprise cyclic and/or non-cyclic structural elements and can be linear and/or branched. C1-C4-alkanediyl for example includes, among others, methane-1,1-diyl, ethane-1,2-diyl, ethane-1,1-diyl, propane-1,3-diyl, propane-1,2-diyl, propane-1,1-diyl, butane-1,4-diyl, butane-1,3-diyl, butane-1,2-diyl, butane-1,1-diyl, butane-2,3-diyl. Furthermore, individual hydrogen atoms bound to the alkanediyl compound may in each case be substituted by a functional group such as those defined above for the alkyl group. Unless stated otherwise, alkanediyl groups are preferably unsubstituted. An oxyalkanediyl group is the combination of an oxygen atom bound to an alkanediyl group, e.g. -O-CH₂-CH₂-.

The composition according to the invention comprises at least one unsaturated polyester resin. An unsaturated polyester resin in the context of the present invention is an unsaturated synthetic resins formed by the reaction of at least one dibasic organic acid and at least one polyhydric alcohol. Preferably, the unsaturated polyester resin is a selected from the group consisting of dicyclopentadiene type unsaturated polyester resin, orthophthalic acid type unsaturated polyester resin and isophthalic acid type unsaturated polyester. Most preferably, the at least one unsaturated polyester resin is a dicyclopentadiene polyester resin.

Preferably, the amount of the at least one unsaturated polyester resin ranges from 20 to 99.9 vol.- % (volume per cent), more preferably from 35 to 80 vol.-%, even more preferably from 40 to 60 vol.-% and yet even more preferably from 45 to 55 vol.-%, based on the total volume of the composition.

Preferably, the amount of polyolefins such as polyethylene or polypropylene in the composition according to the invention is 1 wt.-% or less, preferably 0.1 wt.-% or less, based on the total weight of the composition; ideally, the composition is free of polyolefins. Polyolefins were found to unfavorably increase the viscosity during processing of the composition. Furthermore, polyolefins may impart unfavorable properties to the articles formed with such compositions, such as low temperature resistance and unsatisfying paintability.

Preferably, the amount of polyamides such as PA 6 and PA 66 in the composition according to the invention is 1 wt.-% or less, preferably 0.1 wt.-% or less, based on the total weight of the composition; ideally, the composition is free of polyamides. Polyamides were found to unfavorably increase the viscosity during processing of the composition. They also tend to be poorly compatible with unsaturated polyester resins and thus give poor mechanical properties of formed articles with such compositions.

It is preferred that the amount aluminum compounds in the composition according to the invention is 1 wt.-% or less, more preferably 0.1 wt.-%. Ideally, the composition is free of aluminum compounds as these compounds occasionally unfavorably increase the weight of a formed article.

The composition according to the invention comprises at least one hollow glass body comprising at least one coating layer present on at least a part of its surface obtained by treating the at least one hollow glass body with a treatment composition comprising at least one silane compound according to formula (A)

R^{a1}-Si-(OR^{a2})₃ (A),

an oligomer or a polymer formed therewith (or preferably thereof).

The at least one hollow glass body is hollow, i.e. the at least one hollow glass body comprises an outer glass shell enclosing a hollow space. The hollow space is either filled with vacuum or, preferably, with a gas or a gas mixture such as air or nitrogen and optionally one or more blowing agents used in the manufacturing of the hollow glass body or remnants thereof.

Typically, the composition comprises a plurality of hollow glass bodies. Preferably, the amount of the at least one hollow glass body ranges from 0.1 to 80 vol.-%, preferably from 15 to 70 vol.-%, more preferably from 45 to 65 vol.-%, even more preferably from 50 to 55 vol.-%, based on the total volume of the composition.

The glass of the hollow glass body is not particularly limited. Typically, the glass comprises 50 to 90 percent of SiO₂, from 2 to 20 percent of alkali metal oxide, from 1 to 30 percent of B₂O₃, from 0.005-0.5 percent of sulfur (for example, as elemental sulfur, sulfate or sulfite), from 0 to 25 percent divalent metal oxides (for example, CaO, MgO, BaO, SrO, ZnO, or PbO), from 0 to 10 percent of tetravalent metal oxides other than SiO₂ (for example, TiO₂, MnO₂, or ZrO₂), from 0 to 20 percent of trivalent metal oxides (for example, Al₂O₃, Fe₂O₃, or Sb₂O₃), from 0 to 10 percent of oxides of pentavalent atoms (for example, P₂O₅ or V₂O₅), and from 0 to 5 percent fluorine (as fluoride). Preference is given to soda-lime-borosilicate glass because of its chemical and mechanical stability.

Typically, the at least one hollow glass body should have a sufficiently high dimensional stability to withstand the processing conditions for making the article according to the invention. This can be determined by routine experiments by the skilled artisan. For this purpose, it is possible to adjust the thickness of the glass shell of the at least one hollow glass body accordingly or to select a suitable glass composition (*vide supra*). Useful thicknesses of the glass shell exemplarily range from 0.6 to 1.6 microns.

One way of assessing the dimensional stability is the measurement of the hydrostatic pressure at which ten percent by volume of (a sample of) the hollow glass bodies collapse. This hydrostatic pressure should normally be at least 20 megapascals (MPa). Preferably, a hydrostatic pressure at which ten percent by volume of the hollow glass bodies collapse can be at least 100, more preferably 110, or even more preferably 120 MPa. Alternatively, the collapse strength of the hollow glass bodies is measured on a dispersion of the hollow glass bodies in glycerol using ASTM D3102 -72 "Hydrostatic Collapse Strength of Hollow Glass Microspheres"; with the exception that the sample size (in grams) is equal to 10 times the density of the hollow glass bodies.

The "average true density" of the at least one hollow glass body is the quotient obtained by dividing the mass of a sample of at least one hollow glass body by the true volume of that mass of at least one hollow glass body as measured by a gas pycnometer. The "true volume" is the aggregate total volume of the at least one hollow glass body, not the bulk volume. The average true density of the at least one hollow glass body useful for the composition according to the invention is generally at least about 0.2 grams per cubic centimeter (g/cm³), usually at least 0.25 g/cm³. Preferably, the average true density of the at least one hollow glass body ranges from 0.2 to 0.65 g/cm3, more preferably from 0.25 to 0.6 g/cm³, even more preferably from 0.3 to 0.55 g/cm³.

The at least one hollow glass body is preferably round-shaped, ideally, spherical as this improves the mechanical properties of the article formed with the composition according to the invention. Preferably, the at least one hollow glass body is a glass microsphere. Suitable glass microspheres are commercially available, e.g. from 3M Corp. under the tradename S32HS or iM16k.

The at least one hollow glass body preferably has an average diameter ranging from 10 to 100 µm, preferably from 15 to 50 µm, more preferably from 20 to 30 µm. The d₉₅ value preferably ranges from 10 to 200 µm, preferably from 15 to 100 µm, more preferably from 20 to 50 µm. The average diameter and the d₉₅ can be measured by laser light diffraction by dispersing the at least one hollow glass body in deareated and deionized water. The preferred laser light diffraction measurement tool in the context of the present invention is a Mastersizer 2000 available from Malvern Instruments, UK.

The at least one hollow glass body comprises at least one coating layer on obtained by treating the at least one hollow glass body with a treatment composition comprising at least one silane compound according to formula (A)

R^{a1}-Si-(OR^{a2})₃ (A)

wherein
R^{a1} is selected from the group consisting of alkyl group having at least 4 carbon atoms, oligo(oxyalkanediyl) group and poly(oxyalkanediyl) group,
each R^{a2} is independently selected from the group consisting of hydrogen, alkyl group and aryl group,
or an oligomer or a polymer formed therewith.

The coating layer is present on at least a part of the surface of the at least one hollow glass body.

The treatment composition comprises or consists of at least one silane according to formula (A). The silane compounds according to formula (A) are generally commercially available or can be made by numerous methods known to person skilled in the art. The exact composition of the coating layer is difficult to analyze and not yet fully understood. It is likely that the coating layer is bound chemically to the surface of the at least one hollow glass body, e.g. by a siloxane bond such as one formed between the silicon atom of the at least one silane compound according to formula (A) and a silanol group of the glass surface.

Preferably, the alkyl of R^{a1} is an alkyl group having at least 8 carbon atoms, it is more preferably a C8-C22-alkyl group and even more preferably a C12-C18-alkyl group. The outlined preferences are due to an improved control of the viscosity while manufacturing an article with the composition according to the invention.

The oligo(oxyalkanediyl) group and the poly(oxyalkanediyl) group comprise a terminating group, if required to satisfy any unsatisfied valences. Such terminating group is preferably selected from the group consisting of hydrogen, alkyl group, aryl group, hydroxyl group, more preferably selected from hydrogen, C1-C4-alkyl group and hydroxyl group.

The poly(oxyalkanediyl) group is preferably represented by the following formula:

-O-(CH₂-CH(Y)ₙ-X

with
n being an integer and n being at least 5, X being a terminating group, and Y being selected from the group consisting of hydrogen, methyl group and phenyl group.

n preferably ranges from 6 to 50, more preferably from 10 to 40, even more preferably from 20 to 30. X is preferably selected from the group consisting of hydrogen, alkyl group and hydroxy group, more preferably selected from the group consisting of hydrogen, C1-C4-alkyl group and hydroxy group. Y is preferably selected from the group consisting of hydrogen and methyl group, Y more preferably is hydrogen.

Preferably, the oligo(oxyalkanediyl) group is represented by the same formula as the poly(oxyalkanediyl) group with n being an integer ranging from 2 to 4. The poly(oxyalkanediyl) group is preferred over the oligo(oxyalkanediyl) group as it allows for a better control of the viscosity while manufacturing an article with the composition according to the invention.

Optionally, at least one oligomer or at least one polymer of the at least one silane compound according to formula (A) is used. An oligomer comprises or consists of 2 to 4 repeating units, a polymer at least 5 repeating units. The repeating units in this case are formed from the individual silane compounds according to formula (A). This can be achieved by standard means known to the skilled artisan. For example, a suitable silane can be treated with an aqueous solution of an acid to produce an oligomer or a polymer (or a mixture thereof) by condensation of the silanes employed. It is also possible to use condensation catalysts such as amines or titanates (e.g. tetraalkoxytitanate) for this purpose.

R^{a2} is preferably selected from the group consisting of alkyl group and aryl group, more preferably it is a C1-C4-alkyl group, more preferably selected from the group consisting of methyl group and ethyl group to allow for an efficient coating layer preparation. If ecological properties are a major concern, it is advisable to select hydrogen as R^{a2} to minimize the VOC liberation during preparation of the coating layer.

In one embodiment of the present invention, R^{a1} is an alkyl group having at least 4 carbon atoms, preferably an alkyl group having at least 8 carbon atoms, more preferably a C8-C22-alkyl group, even more preferably a C12-C18-alkyl group. This embodiment is particularly useful when employing very high amounts of the hollow glass bodies such as 51 to 60 vol.-% or 55 vol.-% or more as the viscosity remains comparatively low. In another embodiment of the present invention, R^{a1} is selected from the group consisting of oligo(oxyalkanediyl) group and poly(oxyalkanediyl) group. Preferably, R^{a1} is a poly(oxyalkanediyl) group. This embodiment is particularly useful when employing lower to high amounts of the hollow glass bodies, e.g. ranging from 45 to 50 vol.-% as the viscosity remains comparatively low in this range.

Preferably, the mass ratio of the at least one silane compound according to formula (A) to the at least one hollow glass body ranges from 0.1 to 50 wt.-%, more preferably from 0.2 to 5 wt.-%, even more preferably from 0.5 to 2 wt.-%. If more than one at least one silane compound according to formula (A) is used, the total amount of all compounds lies in above ranges. Higher amounts of the silane only add to the cost while too low amounts might in some instances not yield the beneficial effects of the present invention outlined herein.

The treatment composition comprising the at least one silane compound according to formula (A) preferably comprises the at least one unsaturated silane such that the treatments with both compounds can be performed simultaneously. The treatment composition optionally comprises further compounds known in the art. It optionally comprises at least one solvent suitable to dilute the silane such as an alcohol like ethanol or methanol. It further optionally comprises at least one catalyst suitable to promote the reaction of the at least one silane according to formula (A) and the surface of the at least one hollow glass body. In one embodiment of the present invention, the treatment composition consists of the at least one silane compound according to formula (A) and optionally the at least one unsaturated silane.

The coating layer of the at least one silane compound according to formula (A) can be obtained by known means in the art. For example, the hollow glass bodies are treated with said compound by means of dipping, spraying, sprinkling or painting. Preferably, the thus treated hollow glass bodies are then dried using elevated temperatures, e.g. ranging from 50 to 300 °C, preferably from 60 to 200 °C, more preferably from 70 to 100 °C. The elevated temperatures can be provided using standard means, e.g. an oven or IR-radiation.

Preferably, the at least one hollow glass body is further surface treated with an unsaturated silane, preferably selected from the group consisting of (3-acryloxypropyl)trialkoxysilane, (3-methacryloxypropyl)trialkoxysilane, vinyltrialkoxysilane, N-(vinylbenzylamino)alkanediyltrialkoxysilane and mixtures of the aforementioned, a hydrolysate thereof, an oligomer or polymer formed therewith. A hydrolysate is a compound derived from one the aforementioned silanes where at least one alkoxy groups has been substituted for an hydroxyl group. This can be achieved by treating said silane with a sufficient amount of water. With regards to the oligomer and the polymer formed with the at least one unsaturated silane, the details outlined for the oligomer and the polymer formed with the at least one silane compound according to formula (A) apply *mutatis mutandis.* The unsaturated silane further significantly improves the mechanical properties of the article formed with the composition according to the invention. More preferably, the unsaturated silane is selected from the group consisting of (3-acryloxypropyl)trialkoxysilane, (3-methacryloxypropyl)trialkoxysilane and mixtures of the aforementioned. Particular preference is given to (3-methacryloxypropyl)trialkoxysilane as it excels in the aforementioned regard. The further surface treatment with the unsaturated silane can be obtained as described for the coating layer of the silane compound according to formula (A).

Preferably, the mass ratio of the at least one unsaturated silane to the at least one hollow glass body ranges from 0.1 to 50 wt.-%, more preferably from 0.2 to 5 wt.-%, even more preferably from 0.5 to 2 wt.-%. If more than one unsaturated silane is used, the total amount of all compounds lies in above ranges. Higher amounts of the silane only add to the cost while too low amounts might in some instances not yield the beneficial effects of the present invention outlined herein.

This further surface treatment forms either a separate layer on the hollow glass body on or underneath the coating layer obtained from the silane according to formula (A) or the coating layer obtained by treating the at least one hollow glass body with a treatment composition comprising at least one silane compound according to formula (A) and the at least one unsaturated silane form a mutual layer. This mutual layer is typically a physical mixture of the at least one coating layer and the further surface treatment. The latter can be achieved by treating the hollow glass bodies with a mixture comprising the at least one silane compound according to formula (A) and the unsaturated silane.

Optionally - albeit not preferably -, the composition comprises at least one commonly used additive selected from the group consisting of impact modifier, compatibilizer, antioxidant, light stabilizer, fillers, anti-blocking agent, plasticizer, fire retardants, pigments and mixtures of the aforementioned. In one embodiment of the present invention, the composition consists of the unsaturated polyester resin and the at least one hollow glass body.

In one embodiment of the present invention, the composition according to the invention comprises or consists of the at least one unsaturated polyester resin, and the at least one hollow glass body comprising the at least one coating layer present on at least a part of its surface.

In another aspect, the present invention concerns a method of preparing a composition suitable for sheet-molding processing, preferably the composition according to the invention, comprising the method steps
A1) providing at least one hollow glass body;
A2) treating the surface of the at least one hollow glass body with a treatment composition comprising at least one silane compound according to formula (A)

   R^{a1}-Si-(OR^{a2})₃ (A)

   wherein
   R^{a1} is selected from the group consisting of C8-C22-alkyl group, oligo(oxyalkanediyl) group and poly(oxyalkanediyl) group,
   each R^{a2} is independently selected from the group consisting of alkyl group and aryl group; and
A3) providing at least one unsaturated polyester resin;
A4) mixing the at least one hollow glass body and the at least one unsaturated polyester resin; and thereby obtaining the composition.

The method according to the invention comprises method steps A1) to A4). The method according to the invention optionally comprises further method steps to be carried out before, after and/or between said method steps.

The order of method steps can be varied widely in the context of the present invention. For example, method step A2) is carried out before or during method step A4). Thus, it is possible to first mix the at least one unsaturated polyester resin and the at least one hollow glass body and treat the latter in the formed mixture whereby the composition is obtained. Alternatively, it is possible within the context of the present invention to first provide the at least one unsaturated polyester resin (method step A3) and mix it with the treatment composition comprising at least one silane compound according to formula (A) necessary for method step A2) and add the at least one hollow glass body thereafter to said mixture (method step A4). Preferably, method steps A1) and A2) are performed before method step A4) as lower amounts of the treatment composition comprising at least one silane compound according to formula (A) are required and more homogeneous coatings on the surface of the at least one hollow glass body are obtained.

In method step A1), the at least one hollow glass body is provided.

In method step A2), the surface of the at least one hollow glass body is treated with the treatment composition comprising at least one silane compound according to formula (A). The surface of the hollow glass body is treated in its entirety or only one or more portions thereof are treated. The mass ratio of the at least one silane compound according to formula (A) to the at least one hollow glass body preferably ranges from 0.1 to 50 wt.-%, more preferably from 0.2 to 5 wt.-%, even more preferably from 0.5 to 2 wt.-%. If more than one at least one silane compound according to formula (A) is used, the total amount of all compounds lies in above ranges.

Said treatment can be carried out by many known means in the art. The hollow glass bodies are preferably treated with the treatment composition comprising the at least one silane compound according to formula (A) (and optionally with the unsaturated silane simultaneously by means of dipping, spraying, sprinkling or painting. The mass ratio of the silane compound to the at least one hollow glass body preferably ranges from 0.1 to 50 wt.-%, more preferably from 0.2 to 5 wt.-%, even more preferably from 0.5 to 2 wt.-%. The treatment can be carried by using the pure compound or in a diluted form, e.g. using a treatment composition of the silane compound according to formula (A), optionally comprising a suitable solvent (e.g. a monohydric alcohol such as ethanol) and optional comprising a catalyst (e.g. hydrochloric acid or titanium tetraisopropoxide) in amounts suitable to meet the present demands. The at least one silane compound according to formula (A) and optionally the unsaturated silane are preferably used in amounts as described hereinbefore.

Preferably, the thus treated hollow glass bodies are then dried, preferably using elevated temperatures. The elevated temperatures typically range from 50 to 300 °C, preferably from 60 to 200 °C, more preferably from 70 to 100 °C. The elevated temperatures can be provided using standard means, e.g. an oven or by employing IR-radiation. The duration of the drying is not particularly limited. Typical durations range from 1 min to 24 h, preferably from 1 h to 6 h. Alternatively, the thus treated hollow glass bodies are used directly after the treatment as such. The latter is usually the case when method step A2) is carried out while performing method step A4).

Optionally, the method comprises a further method step to be included (directly) before or after method step A2):
A2a) treating the surface of the at least one hollow glass body with at least one unsaturated silane.

Said treatment with the unsaturated silane yields a separate layer on the surface of the hollow glass body. The conditions described for method step A2) apply *mutatis mutandis* for method step A2a). If a mixed layer of the unsaturated silane and the at least one silane compound according to formula (A) is desired, the two named compounds can be applied simultaneously in one method step (*vide supra*). Generally, it is preferred to apply the two named compounds simultaneously in one method step to shorten the overall method in order to save time and cost. By carrying out, method step A2) (and optionally method step A2a)), the coating layer on the surface of the at least one hollow glass body is obtained.

In method step A3), the at least one unsaturated polyester resin is provided.

In method step A4), the at least one hollow glass body and the at least one unsaturated polyester resin are mixed. There are various methods for this purpose known to the person skilled in the art. For example, the at least one hollow glass body and the at least one unsaturated polyester resin can be mixed by hand, using a suitable mixing device such as Speedmixer, Dough mixer, rotary blade, double planary ross mixer or by other known means. Typically, it is useful to employ a sufficiently high temperature so that the at least one unsaturated polyester resin is at least partially liquid. Most unsaturated polyester are liquid at room temperature (i.e. 20 °C). It is useful that the temperature is selected to be low enough to prevent curing of the at least one unsaturated polyester resin. Usual temperatures thus depend significantly on the choice of the at least one unsaturated polyester resin and can be selected by the person skilled in the art employing routine experiments.

The temperature in method step A4) depends *inter alia* on the at least one unsaturated polyester resin. General applicable guidelines are known in the art and can be found *inter alia* in US 8,241,739 B2 (see especially col. 5, I. 63 to col. 7, I. 11).

The duration of the mixing depends on various factors such as the viscosity of the mixture formed and the amounts of the named components. Higher amounts typically require longer mixing durations. Usually, the mixing duration lasts from 1 s to 24 h, preferably from 5 s to 1 h, more preferably from 10 s to 60 s.

In case the composition according to the invention is to comprise one or more of the commonly used additives described hereinbefore, they are ideally added in the method step A4). They can be simply mixed in while mixing the at least one hollow glass body and the at least one unsaturated polyester resin.

In a first embodiment of the present invention, the method of preparing a composition suitable for melt-processing comprises the method steps A1) to A4), wherein method step A2) is carried out before method step A4). Preferably, the method steps are performed in the order given above. The method of the first embodiment allows to save time compared to the method above.

In a second embodiment of the present invention, the method of preparing a composition suitable for melt-processing comprises the method steps A1) to A4), wherein method step A2) is carried out during method step A4). To that end, the treatment composition comprising the at least one silane compound according to formula (A) and optionally, the at least one unsaturated silane are added to the mixture. Said treatment composition can be added to the at least one unsaturated polyester resin before, after or simultaneously with the at least one hollow glass body. The method of the second embodiment allows to save time compared to the method above.

It is a decisive advantage of the present invention that the viscosity of the mixture in method step A4) remains much lower compared to mixtures using hollow glass bodies treated without any silane compound according to formula (A).

In a further aspect of the present invention, it's directed at a method of making an article comprising melt-processing the composition according to the invention.

The person skilled in the art knows several ways of how to make an article by thermoset (molding) processing the composition. The article is preferably made by a sheet-molding (compounding) process, especially a compression molding process. Typically, the composition is filled in a suitable vessel and then cured employing a sufficiently high temperature and pressure. The vessel and its shape are selected based on the desired physical appearance and its properties of the article to be made.

Useful process parameters such as temperatures and pressures range can be selected by routine experiments by the person skilled in the art. General applicable guidelines and further useful additives such as initiators are known in the art and can be found *inter alia* in US 8,241,739 B2 (see especially col. 5, I. 63 to col. 7, I. 11). For example, the SMC sheets can be produced and cut into pieces and filled into a suitable mold before being subjected to a useful temperature (e.g. 135 to 155 °C) and pressure (e.g. 30 to 100 bar) to make the article.

Preferably, the article does not comprise any polyolefins for the reasons laid out before. It preferably does not comprise any polyamides for the reasons laid out before.

By applying the temperature and the pressure described above, the article is cured. After the article is cured, it can be removed from the vessel. It is then ready for use.

The present invention further concerns an article comprising the composition according to the present invention. Articles are not limited in their shape or function. Preferable articles are used in the manufacturing of mobility devices, preferably of vehicles, more preferably of cars. The articles may be parts of the car body, doors, dashboard parts or decorative parts of the mobility device such as handles.

The president mentioned is further directed at a mobility device, especially a vehicle such as a car, comprising at least one article as defined hereinbefore.

Further, the present invention concerns the use of at least one silane compound according to formula (A), an oligomer or a polymer formed therewith to control the viscosity of a liquid mixture comprising at least one unsaturated polyester resin and at least one hollow glass body.

Control of the viscosity means in the context of the present invention that the viscosity of the liquid mixture can be kept in processable ranges. Typically, the viscosity of the liquid mixture comprising the at least one unsaturated polyester and the at least one hollow glass body should be as low as possible. The viscosity increase depends *inter alia* on the polyester resin and the hollow glass bodies and the amounts used of the aforementioned. The at least one silane compound according to formula (A) is preferably present as coating layer on at least a part of the surface on the at least one hollow glass body.

The invention will now be illustrated by reference to the following non-limiting examples.

### EXAMPLES

Commercial products were used as described in the technical datasheet available on the date of filing of this specification unless stated otherwise hereinafter.
In the following experiments the following glass microspheres obtained from 3M Corp. under the tradename S32HS were used as hollow glass bodies. As unsaturated polyester resin, a product obtained from AOC resins under the tradename S905-70G was used in all experiments.

The following silanes were used in the experiments:
Silane 1: 3-Methacryloxypropyltrimethoxysilane
Silane 2: Hexadecyltrimethoxysilane (a at least one silane compound according to formula (A) wherein R^{a1} is an alkyl group having 16 carbon atoms)
Silane 3: Dynasylan 4148, a polyethyleneglycol-functional alkoxysilane (a at least one silane compound according to formula (A) wherein R^{a1} is a poly(oxyalkanediyl) group)

### Experimental procedure:

The glass microspheres were placed in a container (corresponds to method step A1) and the liquid silane (1.0 wt.-% relative to glass microsphere weight) was added dropwise thereto (corresponds to method step A2). Following this addition of the silane, the system was mixed in a paint shaker for two 10 minute sessions. Following this shaking procedure, the silane-treated glass microspheres were placed in an oven at 80 °C for 2 hours. The silane-treated glass microspheres were then removed from the oven and left to cool down to room temperature before being incorporated into the unsaturated polyester resin.

The silane-treated glass microspheres were added into the unsaturated polyester resin by hand (corresponds to method steps A3 and A4, 20 °C), then mixed in a FlackTek mixer for 30 seconds at 2000 RPM. This mixing process was repeated three times before proceeding to viscosity measurements.

### Viscosity measurements

To measure the viscosity of the glass microsphere filled unsaturated polyester resins, a Brookfield viscometer was used. Spindle #RV-07 was used for all measurements, and a Thermosel was used to keep the temperature of the system constant at 35 °C. Each viscosity measurement is the average of 600 viscosity measurements taken at a specified RPM (rotations per minute) of the viscometer spindle that was operated for 60 seconds (recording a viscosity data point every 0.1 seconds). The measurement results are given in the following tables.

**Table 1: Viscosity Data for unsaturated polyester resin filled with 45vol% glass microspheres with various silane surface treatments.**

| **RPM** | **Unfilled Resin** | **Untreated** | **Silane 1** | **Silane 2** | **Silane 1 + Silane 2** | **Silane 3** | **Silane 1 + Silane 3** |
|---|---|---|---|---|---|---|---|
| | comparative | comparative | comparative | inventive | inventive | inventive | inventive |
| | [mPa*s] | [mPa*s] | [mPa*s] | [mPa*s] | [mPa*s] | [mPa*s] | [mPa*s] |
| 1 | 4125 | 77630 | 62630 | 32250 | 46880 | 23090 | 22130 |
| 2 | 3750 | 70500 | 54000 | 31310 | 42750 | 22880 | 21560 |
| 3 | 3500 | 63880 | 44250 | 29630 | 41380 | 21880 | 21380 |
| 4 | 3188 | 58410 | 40780 | 27560 | 36560 | 21000 | 20630 |
| 5 | 2860 | 53930 | 37730 | 25580 | 33530 | 20250 | 20030 |
| 6 | 2563 | 50500 | 35560 | 24440 | 31250 | 19560 | 19630 |
| 7 | 2411 | 48050 | 33910 | 23410 | 28880 | 19130 | 19390 |
| 8 | 2250 | 45560 | 32910 | 22730 | 26980 | 18840 | 19350 |
| 9 | 2167 | 37500 | 31920 | 22000 | 24210 | 18670 | 19130 |
| 10 | 2100 | 37500 | 31350 | 21450 | 22440 | 18490 | 19030 |

**Table 2: Viscosity Data for unsaturated polyester resin filled with 50 vol.-% glass microspheres with various silane surface treatments.**

| **RPM** | **Unfilled Resin** | **Untreated** | **Silane 1** | **Silane 2** | **Silane 1 + Silane 2** | **Silane 3** | **Silane 1 + Silane 3** |
|---|---|---|---|---|---|---|---|
| | com- para- tive | comparative | comparative | inventive | inventive | inventive | inventive |
| | [mPa*s] | [mPa*s] | [mPa*s] | [mPa*s] | [mPa*s] | [mPa*s] | [mPa*s] |
| 1 | 4125 | 165400 | 162000 | 72750 | 77750 | 48000 | 58130 |
| 2 | 3750 | 135000 | 123000 | 66940 | 76500 | 47060 | 55690 |
| 3 | 3500 | 122000 | 110400 | 61750 | 70630 | 44380 | 55130 |

**Table 3: Viscosity Data for unsaturated polyester resin filled with 55 vol.-% glass microspheres with various silane surface treatments.**

| **RPM** | **Unfilled Resin** | **Untreated** | **Silane 1** | **Silane 2** | **Silane 1 + Silane 2** | **Silane 3** | **Silane 1 + Silane 3** |
|---|---|---|---|---|---|---|---|
| | com- para- tive | comparative | comparative | inventive | inventive | inventive | inventive |
| | [mPa*s] | [mPa*s] | [mPa*s] | [mPa*s] | [mPa*s] | [mPa*s] | [mPa*s] |
| 1 | 4125 | 375,000 | 375,000 | 105,400 | 110,800 | 151,500 | 156400 |
| 2 | 3750 | >375,000 | >375,000 | 91,130 | 95600 | 125,300 | 129600 |
| 3 | 3500 | >375,000 | >375,000 | 85,880 | 90100 | 100,100 | 105100 |

It is apparent from above measurements that the viscosity of the comparative compositions comprising glass microspheres was always much higher than those of the inventive counterparts. Especially, when increased loadings of the glass microsphere were used (see table 3), the viscosity increases were too high such to even measure the viscosity.

Generally, the composition comprising alkyl silane treated glass microsphere showed slightly higher viscosities compared to the compositions comprising glass microspheres having been treated with the poly(oxyalkanediyl) group containing silane. However, this trend was reversed when using the highest loadings of the glass microspheres.

It can further be observed that high loadings of the glass microspheres can be incorporated even if the glass microspheres were further treated with 3-methacryloxypropyltrimethoxysilane if they have been treated with a silane compound according to formula (A), too. If the latter is absent, the viscosities of such unsaturated polyester resins became quickly non-processible. Thus, it is possible to obtain unsaturated polyester resins having excellent mechanical properties and being ultra-lightweight due to high loadings of suitably treated glass microspheres when using the present invention.

Other embodiments of the present invention will be apparent to those skilled in the art from a consideration of this specification or practice of the invention disclosed herein. It is intended that the specification and examples be considered as exemplary only, with the true scope of the invention being defined by the following claims only.

## Claims

1. A composition suitable for manufacturing of sheet molding compounds comprising
a) at least one unsaturated polyester resin, and
b) at least one hollow glass body
wherein the at least one hollow glass body comprises at least one coating layer on its surface obtained by treating the at least one hollow glass body with a treatment composition comprising at least one silane compound according to formula (A)
R^{a1}-Si-(OR^{a2})₃ (A)
wherein
R^{a1} is selected from the group consisting of alkyl group having at least 4 carbon atoms, oligo(oxyalkanediyl) group and poly(oxyalkanediyl) group,
each R^{a2} is independently selected from the group consisting of hydrogen, alkyl group and aryl group,
an oligomer or a polymer formed therewith.

2. The composition according to claim 1 **characterized in that** the amount of the at least one unsaturated polyester resin ranges from 20 to 99.9 vol.-%, more preferably from 35 to 80 vol.-%, even more preferably from 40 to 60 vol.-% and yet even more preferably from 45 to 55 vol.-%, based on the total volume of the composition.

3. The composition according to any one of claims 1 or 2 that the amount of the at least one hollow glass body ranges from 0.1 to 80 vol.-%, preferably from 15 to 70 vol.-%, more preferably from 45 to 65 vol.-%, even more preferably from 50 to 55 vol.-%, based on the total volume of the composition.

4. The composition according to any one of the preceding claims **characterized in that** the unsaturated polyester resin is a selected from the group consisting of dicyclopentadiene type unsaturated polyester resin, orthophthalic acid type unsaturated polyester resin and isophthalic acid type unsaturated polyester.

5. The composition according to any one of the preceding claims **characterized in that** the amount of polyolefin in the composition is 1 wt.-% or less, preferably 0.1 wt.-% or less, based on the total weight of the composition; ideally the composition is free of polyolefins.

6. The composition according to any one of the preceding claims **characterized in that** the at least one hollow glass body is a glass microsphere.

7. The composition according to any one of the preceding claims **characterized in that** the at least one hollow glass body is further surface treated with an unsaturated silane, preferably selected from the group consisting of (3-acryloxypropyl)trialkoxysilane, (3-methacryloxypropyl)trialkoxysilane, vinyltrialkoxysilane, N-(vinylbenzylamino)alkanediyltrialkoxysilane and mixtures of the aforementioned, a hydrolysate thereof, an oligomer or polymer formed therewith.

8. The composition according to any one of the preceding claims **characterized in that** the composition comprises at least one additive selected from the group consisting of impact modifier, compatibilizer, antioxidant, light stabilizer, fillers, anti-blocking agent, plasticizer, fire retardants, pigments and mixtures of the aforementioned.

9. The composition according to any one of the preceding claims **characterized in that** R^{a1} is an alkyl group having at least 8 carbon atoms, preferably a C8-C22-alkyl group, more preferably a C12-C18-alkyl group.

10. A method of preparing a composition suitable for sheet-molding processing, preferably the composition according to any one of the preceding claims, comprising the method steps
A1) providing at least one hollow glass body;
A2) treating a surface of the at least one hollow glass body with a treatment composition comprising at least one silane compound according to formula (A)
R^{a1}-Si-(OR^{a2})₃ (A)
wherein
R^{a1} is selected from the group consisting of C8-C22-alkyl group, oligo(oxyalkanediyl) group and poly(oxyalkanediyl) group,
each R^{a2} is independently selected from the group consisting of alkyl group and aryl group; and
A3) providing at least one unsaturated polyester resin;
A4) mixing the at least one hollow glass body and the at least one unsaturated polyester resin;
and thereby obtaining the composition.

11. The method according to claim 10 **characterized in that** the mass ratio of the silane compound to the at least one hollow glass body ranges from 0.1 to 50 wt.-%, more preferably from 0.2 to 5 wt.-%, even more preferably from 0.5 to 2 wt.-%.

12. A method of making an article comprising melt-processing the composition according to any one of claims 1 to 9.

13. An article comprising the composition according to any one of claims 1 to 9.

14. A mobility device, especially a vehicle such as a car, comprising at least one article according to claim 13.

15. Use of at least one silane compound according to formula (A), a hydrolysate, an oligomer or a polymer formed therewith to control the viscosity of a liquid mixture comprising at least one unsaturated polyester resin and at least one hollow glass body.
